# EUROPEAN PATENT APPLICATION

(11) **EP 2 000 704 A1**
(43) Date of publication of application: **10.12.2008**
(21) Application number: 07011021.8
(22) Date of filing: 05.06.2007
(51) Int. Cl.: F16H 55/56

(54) **Improved clutch of continuous variable transmission system**

(71) Applicant: Motive Power Industry Co., Ltd., Dacun Township, Changhua County 515 (TW)
(72) Inventor: Lee, Jun-I, Nantou County 542 (TW); Hsieh, Wei-Tsung, Changhua County 513 (TW)
(74) Representative: Winkler, Andreas Fritz Ernst

(57) **Abstract**

A clutch of a continuous variable transmission system includes a gear shaft (23), a driven belt pulley assembly, a clutch disc (25) and a clutch jacket (24). An internal driving disc sleeve (26) is disposed at the driven belt pulley assembly and connected to the clutch disc. The clutch jacket (24) is connected to the gear shaft (23) through a gear shaft sleeve (241). When a belt drives the driven belt pulley assembly to rotate at a high speed, the internal driving disc sleeve (26) drives the clutch disc to rotate accordingly, and each clutch pad on the clutch disc is expanded outward due to a centrifugal force and pressed against the clutch jacket (24) to drive both clutch jacket (24) and gear shaft (23) to rotate. An oil seal (27) is installed in a sleeve inside the driving disc and contacted with the internal driving disc sleeve (26) and the gear shaft sleeve (241) to facilitate a shift of gears.

## Description

### FIELD OF THE INVENTION

The present invention relates to a clutch, and more particularly to an improved clutch of a continuous variable transmission system capable of shifting gears easily.

### BACKGROUND OF THE INVENTION

Manual stick shift transmission box has been a mainstream automobile design for a while, simply due to driving habits and environments and no breakthrough of electronic technologies, and thus it took a long time before automatic transmission box was introduced and well developed until '70 by manufacturers to provide a convenient way of driving and complying with the environments. Automatic transmission boxes varying from 3-speed or 4-speed to 5-speed or 6-speed were developed and introduced to the market, and some of them still maintain the manual stick shift function, but all of the aforementioned automatic transmission boxes are unable to satisfy user requirements. Thus, a simple and convenient continuous variable transmission (CVT) system was developed, and also becomes very popular soon after its introduction, since the continuous variable transmission system (CVT) is an excellent power transmission system having a ratio of rotational speeds of two gears varied continuously within a given range, and thus its power transmission is direct and smooth. Unlike a general 4-speed manual stick shift transmission system that usually has a discrepancy of 1~2 gear ratio, and often causes vibrations during a transmission shift and problems such as an unsmooth shift of motive forces, an idle period of transmitting motive forces during a change of gear, an indirect response of gas pedal and a loss of motive forces.

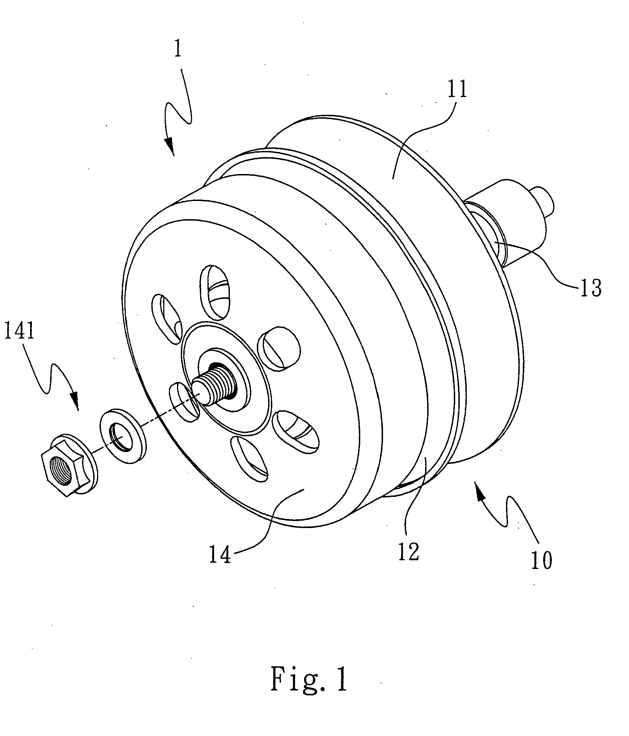

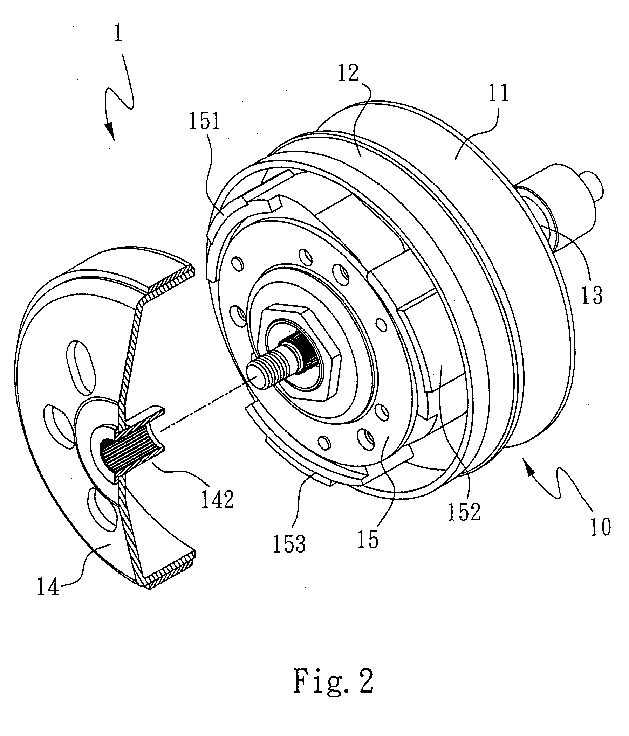

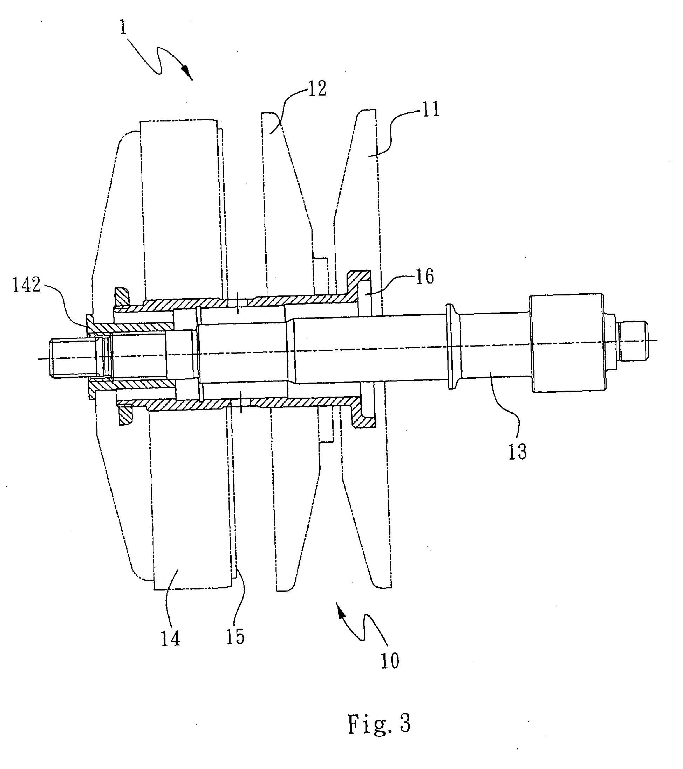

Referring to Fig. 1 for a perspective view of a conventional clutch of a continuous variable transmission system, and Figs. 2 and 3 for an exploded view and a side section view of a portion of a conventional clutch of a continuous variable transmission system respectively, the conventional clutch 1 is composed of a gear shaft 13, a driven belt pulley assembly 10, a clutch disc 15 and a clutch jacket 14, and the driven belt pulley assembly 10 is composed of a fixed driving disc 11 and a gliding driving disc 12. When an engine starts, a belt (not shown in the figure) installed in a V-shape groove formed between the internal sides of the fixed driving disc 11 and the gliding driving disc 12 is driven to rotate, and thus the fixed driving disc 11 and the gliding driving disc 12 are driven to rotate accordingly. When the belt drives the driven belt pulley assembly 10 to rotate at a high speed, an internal the driving disc sleeve 16 of the fixed driving disc 11 is rotated to drive the clutch disc 15 to rotate accordingly, and each clutch pad 151, 152, 153 on the clutch disc 15 is expanded outward due to a centrifugal force and pressed against the clutch jacket 14 to drive the clutch jacket 14 to rotate, and a gear shaft sleeve 142 at the center of the gear shaft 13 drives the gear shaft 13 to rotate together, and a gear box (not shown in the figure) can shift the gear by the rotational force to drive a motor vehicle. The gear shaft 13 further has a fixing element 141 at its end, such that the fixing element 141 presses against the external surface of the clutch jacket 14 to provide a closer link of the clutch jacket 14 and the gear shaft 13. When a motor vehicle is situated at an idle speed status, the rotational speed of its engine is usually not too high, and thus the centrifugal force provided by the belt to the clutch disc 15 is very small and insufficient to keep the clutch pads 151, 152, 153 in contact with the clutch jacket 14, and the clutch jacket 14 as well as the gear shaft 13 will not rotate. If a user wants to shift gears at that time, the gear shaft 13 is not rotated and a gear shift cannot be achieved, and thus it is necessary to increase the rotational speed to provide sufficient centrifugal force to the clutch disc 15 for a shift of gears. Obviously, such application is very inconvenient.

In view of the foregoing shortcomings of the prior art, the inventor of the present invention based on years of experience to conduct extensive researches and experiments, and finally developed an improved clutch of a continuous variable transmission system that can achieve the effect of shifting gears easily by a simple design.

### SUMMARY OF THE INVENTION

It is a primary objective of the present invention to design an improved clutch of a continuous variable transmission system for achieving the effect of shifting gears easily.

To achieve the foregoing objective, the present invention provides an improved clutch of a continuous variable transmission system, comprising a gear shaft, a driven belt pulley assembly, a clutch disc and a clutch jacket, and the center of the driven belt pulley assembly has an internal driving disc sleeve, and the internal driving disc sleeve is connected to the center of the clutch disc, and the clutch jacket is connected to the gear shaft through a gear shaft sleeve at the center of the clutch jacket. When a belt drives the driven belt pulley assembly to rotate at a high speed, the sleeve of the driving disc at the center also drives the clutch disc to rotate at a high speed accordingly, and each clutch pad on the clutch disc is expanded outward by a centrifugal force and pressed against the clutch jacket to further drive the clutch jacket and the gear shaft to rotate together, wherein the internal driving disc sleeve includes an oil seal therein, and the oil seal is in contact with the internal driving disc sleeve and the gear shaft sleeve.

The present invention also provides another preferred embodiment of an improved clutch of a continuous variable transmission system, comprising: a gear shaft, a driven belt pulley assembly, a clutch disc and a clutch jacket, and the center of the driven belt pulley assembly includes an internal driving disc sleeve, and the internal driving disc sleeve is connected to the center of the clutch disc, and the clutch jacket is connected to the gear shaft through a gear shaft sleeve disposed at the center of the clutch jacket. When a belt drives the driven belt pulley assembly to rotate at a high speed, the internal driving disc sleeve at the center also drives the clutch disc to rotate at a high speed accordingly, and each clutch pad on the clutch disc is expanded outward due to a centrifugal force and pressed against the clutch jacket to further drive the clutch jacket and the gear shaft to rotate together, wherein the internal driving disc sleeve includes an oil seal therein, and the oil seal is in contact with the internal driving disc sleeve and the gear shaft.

The above and other objects, features and advantages of the present invention will become apparent from the following detailed description taken with the accompanying drawing.

### BRIEF DESCRIPTION OF THE DRAWINGS

Fig. 1 is a perspective view of a conventional clutch of a continuous variable transmission system;

Fig. 2 is an exploded view of a portion of components of a conventional clutch of a continuous variable transmission system clutch;

Fig. 3 is a side section view of a conventional clutch of a continuous variable transmission system clutch;

Fig. 4 is a perspective view of the present invention;

Fig. 5 is a side section view of the present invention;

Fig. 6 is a perspective view of an oil seal of the present invention;

Fig. 7A is a planar view of an oil seal of the present invention;

Fig. 7B is a side section view of an oil seal of the present invention;

Fig. 8 is a schematic view of another preferred embodiment of the present invention; and

Fig. 9 is a schematic view of a further preferred embodiment of the present invention.

### DETAILED DESCRIPTION OF THE PREFERRED EMBODIMENTS

To make it easier for our examiner to understand the objective, innovative features and performance of the present invention, we use preferred embodiments and the accompanying drawings for a detailed description of the present invention.

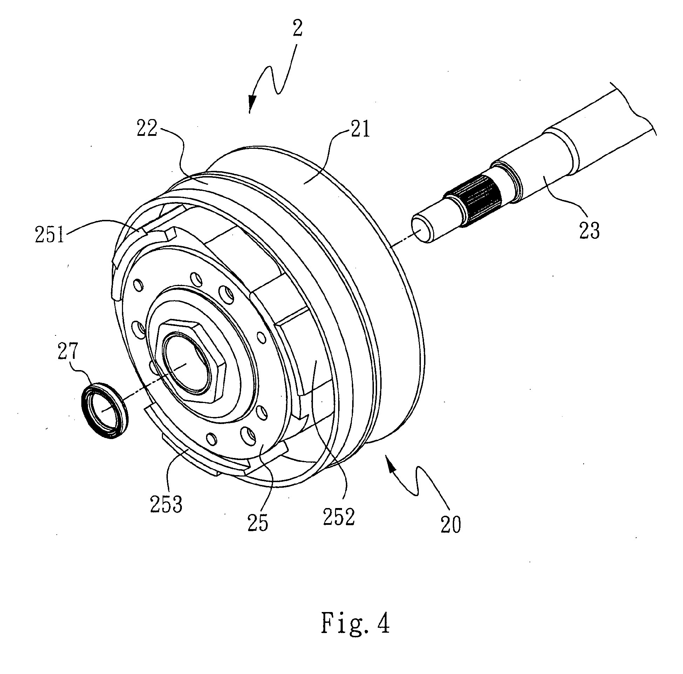

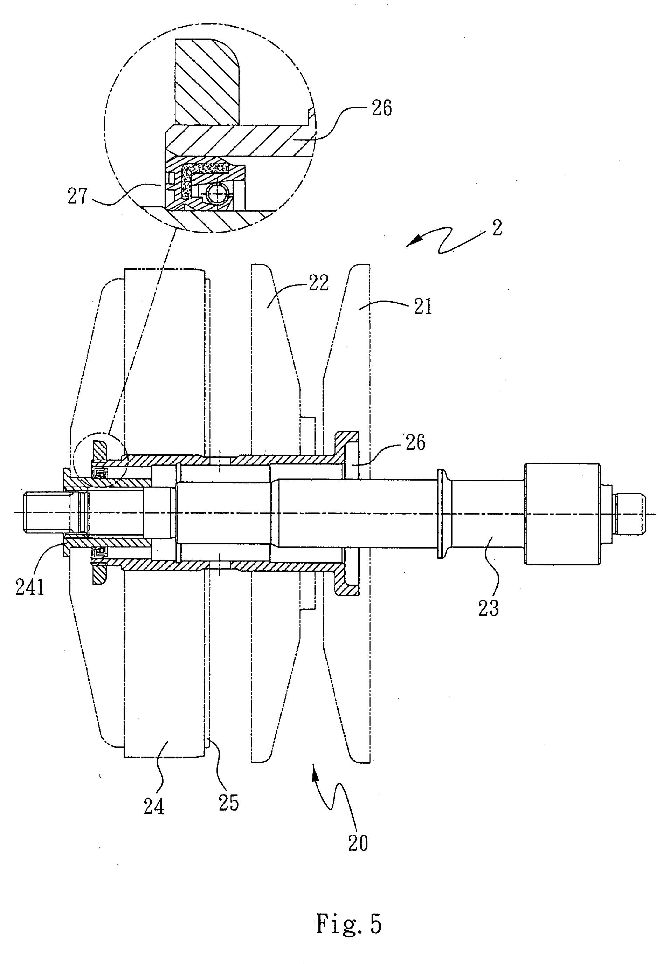

Referring to Figs. 4 and 5 for a perspective view and a side section view of the present invention respectively, the continuous variable transmission system clutch 2 of the invention comprises a gear shaft 23, a driven belt pulley assembly 20, a clutch disc 25 and a clutch jacket 24, and the driven belt pulley assembly 20 includes a fixed driving disc 21 and a gliding driving disc 22, and the center of the driven belt pulley assembly 20 has an internal driving disc sleeve 26, and the internal driving disc sleeve 26 is connected to the center of the clutch disc 25, and the clutch jacket 24 is connected to the gear shaft 23 through a gear shaft sleeve 241 disposed at the center of the clutch jacket 24. If an engine starts and rotates to drive a belt (not shown in the figure) the belt installed in a V-shape groove between the internal surfaces of the fixed driving disc 21 and the gliding driving disc 22 for the rotation, and thus the clutch disc 25 can rotate. If the belt (not shown in the figure) drives the driven belt pulley assembly 20 to rotate at a high speed, a plurality of clutch pads 251, 252, 253 on the clutch disc 25 are expanded outward due to a centrifugal force and pressed against the clutch jacket 24 to further drive the clutch jacket 24 and the gear shaft sleeve 241 at its center to rotate together with the gear shaft 23, so that a gear box (not shown in the figure) can use such rotational force for the shift of gears to drive a motor vehicle. An end of the gear shaft 23 and an external surface of the clutch jacket 24 are integrated by a fixing element (not shown in the figure), so that the clutch jacket 24 is linked more closely with the gear shaft 23, wherein the internal driving disc sleeve 26 includes an oil seal 27 therein, and the oil seal 27 is in contact with the internal driving disc sleeve 26 and the gear shaft sleeve 241, such that a slight friction is produced at the contact surfaces of the oil seal 27, the internal driving disc sleeve 26, and the gear shaft sleeve 241. If the driven belt pulley assembly is rotated at a low speed to drive the internal driving disc sleeve 26 at the center to rotate at a low speed, the internal driving disc sleeve 26 will drive the gear shaft sleeve 241 to rotate due to the slight friction provided by the oil seal 27, so that the gear shaft 23 is rotated at a low speed accordingly. By then, a user can shift a gear easily without the need of further pressing the gas pedal to increase the rotational speed. A centrifugal force is produced before the change of gears, and thus such application is very convenient and practical.

Further, the internal driving disc sleeve 26 includes an oil seal (not shown in the figure) of a shaft in contact with the internal driving disc sleeve 26 in the gear shaft 23, such that a slight friction is produced at the contact surfaces of the oil seal 28, the internal driving disc sleeve 26 and the gear shaft 23 to add a force applying point for the rotation of the gear shaft 23 driven by the internal driving disc sleeve 26.

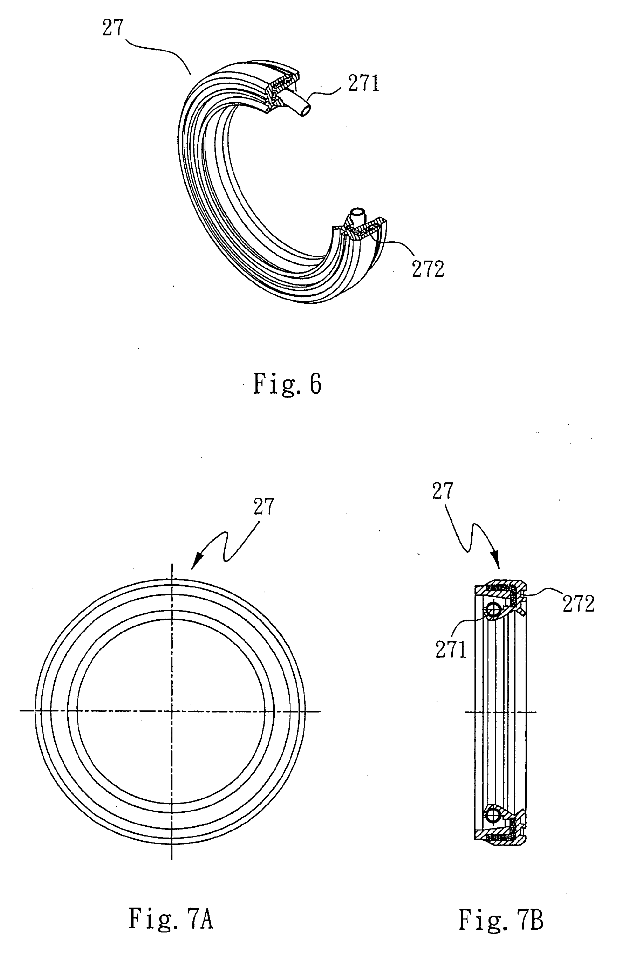

Referring to Figs. 6, 7A and 7B for a perspective view, a planar view and a side section view of an oil seal of the present invention respectively, the oil seal 27 (or the oil seal of the shaft) comprises a rubber ring 271 including a metal ring 272 therein, and the metal ring 272 with a greater hardness can prevent the oil seal 27 (or the oil seal of the shaft) from being deformed easily.

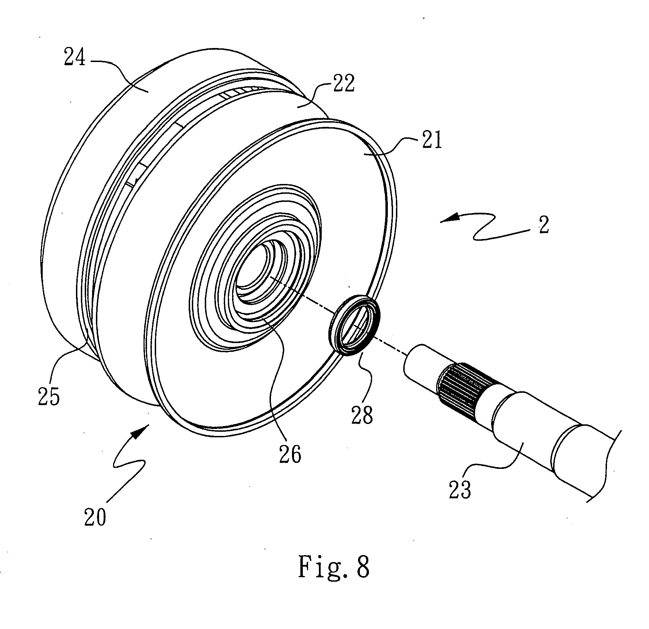

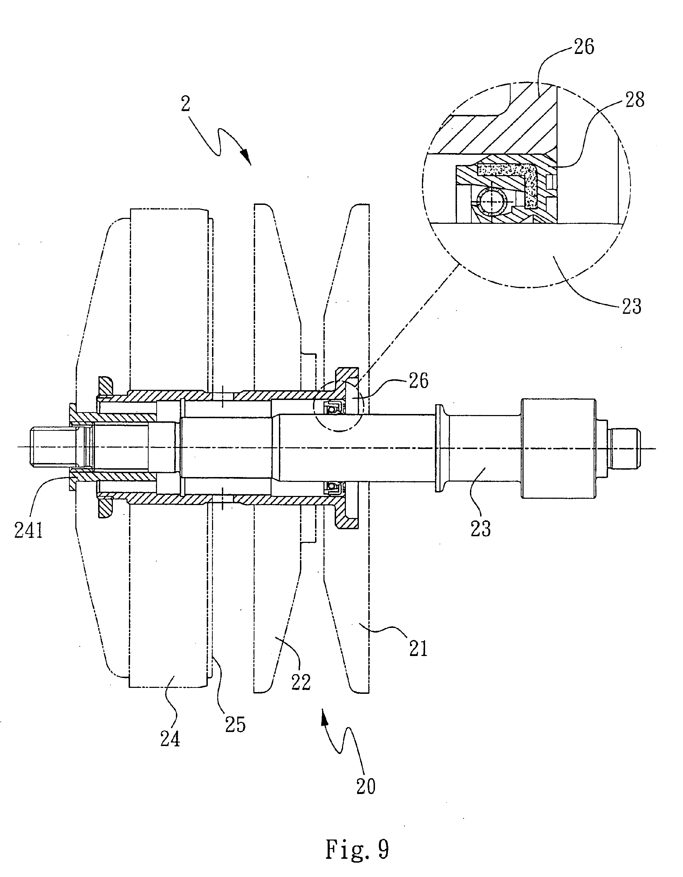

Referring to Figs. 8 and 9 for another preferred embodiment of the present invention, a continuous variable transmission system clutch 2 of the present invention comprises a gear shaft 23, a driven belt pulley assembly 20, a clutch disc 25 and a clutch jacket 24. The driven belt pulley assembly 20 includes a fixed driving disc 21 and a gliding driving disc 22, and the driven belt pulley assembly 20 includes an internal driving disc sleeve 26 connected to the center of the clutch disc 25, and the clutch jacket 24 is connected to the gear shaft 23 through a gear shaft sleeve 241 disposed at the center of the clutch jacket 24. If an engine rotates to drive a belt (not shown in the figure) installed in a V-shape groove between the internal surfaces of the fixed driving disc 21 and the gliding driving disc 22 for the rotation, and the clutch disc 25 can be driven to rotate accordingly. If the belt (not shown in the figure) drives the driven belt pulley assembly 20 to rotate at a high speed, a plurality of clutch pads 251, 252, 253 (as shown in Fig. 4) are expanded outward due to a centrifugal force and pressed against the clutch jacket 24 to further drive the clutch jacket 24 and the gear shaft sleeve 241 at its center to rotate, so as to rotate the gear shaft 23 together. A gear box (not shown in the figure) can use such rotational force for a shift of gears to drive a motor vehicle. In addition, an end of the gear shaft 23 and an external surface of the clutch jacket 24 are integrated by a fixing element (not shown in the figure), such that the clutch jacket 24 is linked more closely with the gear shaft 23, wherein the internal driving disc sleeve 26 includes an oil seal 28 therein, and the oil seal 28 is in contact with the internal driving disc sleeve 26 and the gear shaft 23, such that a slight friction is produced at the contact surfaces of the oil seal 28, the internal driving disc sleeve 26 and the gear shaft 23. If the driven belt pulley assembly 20 is rotated at a low speed to drive the internal driving disc sleeve 26 to rotate at a low speed, the internal driving disc sleeve 26 will drive the gear shaft 23 to rotate at a low speed accordingly due to the slight friction of the oil seal 28. By then, a user can shift a gear easily without the need of pressing the gas pedal to increase the rotational speed. A centrifugal force is produced before the gear is shifted, and thus such application is convenient and practical.

Further, an oil seal (not shown in the figure) can be installed in the gear shaft sleeve 241 and the internal driving disc sleeve 26, such that the oil seal of the sleeve is in contact with the gear shaft sleeve 241 and the internal driving disc sleeve 26 to produce a slight friction at the contact surfaces of the oil seal 28, the internal driving disc sleeve 26 and the gear shaft sleeve 241 to add a force applying point for the rotation of the gear shaft 23 driven by the internal driving disc sleeve 26.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. An improved clutch of a continuous variable transmission system, comprising a gear shaft, a driven belt pulley assembly, a clutch disc and a clutch jacket, and an internal driving disc sleeve being installed at the center of the driven belt pulley assembly and connected to the center of the clutch disc, and the clutch jacket being connected with the gear shaft through a gear shaft sleeve at the center of the clutch jacket, such that when a belt drives the driven belt pulley assembly to rotate at a high speed, the internal driving disc sleeve also drives the clutch disc to rotate at a high speed accordingly, and each clutch on the clutch disc is expanded outward due to a centrifugal force and pressed against the clutch jacket, to further drive the clutch jacket and the gear shaft to rotate together, **characterized in that**:
the internal driving disc sleeve includes an oil seal disposed therein and contacted with the internal driving disc sleeve and the gear shaft sleeve.

2. The improved clutch of a continuous variable transmission system clutch as recited in claim 1, wherein the oil seal is composed of a rubber ring including a metal ring therein.

3. The improved clutch of a continuous variable transmission system clutch as recited in claim 1, wherein the internal driving disc sleeve has an oil seal of a shaft, such that the oil seal of the shaft is in contact with the sleeves of the gear shaft and the driving disc.

4. An improved clutch of a continuous variable transmission system, comprising a gear shaft, a driven belt pulley assembly, a clutch disc and a clutch jacket, and an internal driving disc sleeve being disposed at the center of the driven belt pulley assembly and connected to the center of the clutch disc, and the clutch jacket being connected with the gear shaft through a gear shaft sleeve at the center of the clutch jacket, such that when a belt drives the driven belt pulley assembly to rotate at a high speed, an internal driving disc sleeve at the center also drives the clutch disc to rotate at a high speed, and each clutch pad on the clutch disc is expanded outward due to a centrifugal force and pressed against the clutch jacket to further drive the clutch jacket and the gear shaft to rotate together, **characterized in that**:
the sleeve of the driving disc includes an oil seal disposed therein, and contacted with the internal driving disc sleeve and the gear shaft.

5. The improved clutch of a continuous variable transmission system as recited in claim 4, wherein the oil seal is composed of a rubber ring including a metal ring therein.

6. The improved clutch of a continuous variable transmission system as recited in claim 4, further comprising a sleeve oil seal installed inside the sleeve of the driving disc, such that the oil seal and the gear shaft sleeve are in contact with the internal driving disc sleeve.
